# EUROPÄISCHE PATENTANMELDUNG

(11) **EP 4 804 218 A1**
(43) Veröffentlichungstag der Anmeldung: **09.09.2026**
(21) Anmeldenummer: 26162919.0
(22) Anmeldetag: 06.03.2026
(51) Int. Cl.: H01F 7/04, H01F 7/02, B25J 21/02

(54) **MAGNETBEFESTIGUNG**

(30) Priorität: 07.03.2025 DE 102025108786
(71) Anmelder: TT Innovation AG, 6343 Rotkreuz (CH)
(72) Erfinder: Bressac, Justin, 21700 Chaux (FR); Martin, Guillaume, 68440 Habsheim (DE)
(74) Vertreter: Maucher Jenkins Patent- und Rechtsanwälte

(57) **Zusammenfassung**

Die vorliegende Erfindung betrifft eine Magnetbefestigung (1), bestehend aus einer Basis (2) und einem Befestigungselement (3), welche zwischen einer fixierenden (18) und einer freigebenden Position (19) geschaltet werden kann und so ein sicheres Befestigen und Lösen von Komponenten durch magnetische Anziehung ermöglicht sowie eine effiziente und ergonomische Lösung für die Befestigung bietet. Dabei ist die fixierende Position permanentmagnetisch gesichert. Die magnetischen Elemente, beispielsweise Permanentmagneten (4) in Basis und Befestigungselement, können dabei einen magnetischen Flusskreis bilden. Die Anziehungskraft kann durch Drehen des Befestigungselement (3) in der Basis umgekehrt werden, wodurch entweder magnetische Anziehung oder Abstoßung erzeugt wird, was eine einfache Montage und Demontage ermöglicht. Die Vorrichtung ist nach hygienischen und aseptischen Gesichtspunkten konzipiert und verfügt über geschlossene magnetische Elemente, die eine Verunreinigung verhindern und Sauberkeit gewährleisten. Sie eignet sich somit besonders für Anwendungen, die hohe Anforderungen an Sterilität und Effizienz stellen. Es werden verschiedene Ausführungsformen der Vorrichtung vorgeschlagen, darunter Konfigurationen mit Sackbohrungen, zylindrischen Merkmalen und Durchgangsbohrungen in der Basis, die jeweils für eine sichere Befestigung und eine einfache Entfernung optimiert sind.

## Beschreibung

Die Erfindung betrifft eine pharmazeutische Anlage mit einer kontrollierten Umgebung, aufweisend, insbesondere aufnehmend, eine Magnetbefestigung, wobei die Magnetbefestigung eine Basis und ein Befestigungselement aufweist, welches zwischen einer fixierenden und einer freigebenden Position geschaltet werden kann.

Bei der pharmazeutischen Anlage kann es sich insbesondere um eine aseptische Produktionsanlage handeln, beispielsweise um eine Produktionsnlage die sich im inneren eines Isolators, einem RABS (restricted access barrier systems) oder einem Reinraum befindet und/oder Teil davon ist.

Eine kontrollierte Umgebung kann beispielsweise als ein begrenzter Raumbereich charakterisierbar sein, in welchem definierte Umgebungsbedingungen, insbesondere in Bezug auf eine Luftreinheit und/oder eine Oberflächenreinheit, schaffbar und/oder aufrechterhaltbar sind, beispielsweise durch eine Kontrolle eines Luftaustausches mit einer Außenwelt der kontrollierten Umgebung. Die Kontrolle des Luftaustausches kann beispielsweise durch einen völligen Ausschluss des Luftaustausches im Normalbetrieb (beispielsweise bis auf eine geschlossene Luftzirkulation) oder eine konsequente Vorgabe einer Richtung des Luftaustausches (in die kontrollierte Umgebung oder aus der kontrollierten Umgebung) realisiert sein. Beispiele kontrollierter Umgebungen umfassen Isolatoren, Restricted Access Barrier Systems (zugangsbeschränkte Barrierensysteme, insbesondere vom offenen oder geschlossenen Typ), Containments, Gloveboxes. Innerhalb der kontrollierten Umgebung, insbesondere des Containments oder des Isolators, können somit verschiedene Prozesse zur Verarbeitung verschiedenster Erzeugnisse, beispielsweise pharmazeutischer Erzeugnisse, erfolgen, wobei die Gefahr einer Kontamination wenigstens eines Erzeugnisses durch Partikel und/oder Verunreinigungen von außerhalb und/oder nach außerhalb der kontrollierten Umgebung dezimiert werden kann.

Aus der Praxis sind Magnetbefestigungen bekannt, bei denen zwischen einer fixierenden und einer freigebenden Position durch Abstandsveränderung geschaltet werden kann, insbesondere in dem die magnetische Anziehungskraft zwischen zwei magnetischen Elementen, beispielsweise zwei Magneten oder einem Magneten oder einem ferromagnetischen Element, durch Abstandsveränderung verringert wird oder wobei mindestens ein Elektromagnet ein Magnetfeld neutralisiert. Solche Systeme kommen insbesondere in schmutzbehafteten und raue Umgebungen zum Einsatz. Beispielsweise sind schaltbare Magneten zur Befestigung und/oder Fixierung von Stahlplatten, insbesondere zum Schweißen, bekannt oder zur Befestigung von Dachgepäckträgern, insbesondere Skiträgern, auf Dächern von Kraftfahrzeugen.

Magneten können beispielsweise als Dipole, die einen Nord- und einen Südpol aufweisen, charakterisierbar sein. Das magnetische Feld kann beispielsweise in Form geschlossener Feldlinien, die außerhalb des Magneten vom Nordpol zum Südpol und innerhalb des Magneten vom Südpol zum Nordpol gerichtet sind, verlaufen. Die Stärke des magnetischen Feldes kann beispielsweise durch die magnetische Feldstärke H bzw. die magnetische Flussdichte B beschrieben werden, wobei die magnetischen Eigenschaften eines umgebenden Materials durch dessen Permeabilität bestimmt werden können. Das magnetische Feld kann auf elektrische Ladungen, auf magnetisierbare Körper, wie beispielsweise ferromagnetische Metalle, aber auch auf andere Magneten (magnetische Dipole) eine Kraft ausüben. Dabei entsteht zwischen den entgegengesetzten Polen zweier Magneten (Nord- und Südpol) eine anziehende Kraft, während sich gleiche Pole (Nord- und Nordpol oder Süd- und Südpol) abstoßen. Bei zwei oder mehr Magneten in einem System hängt die Kraft, die zwischen diesen Magneten entsteht, also von ihrer Ausrichtung zueinander ab. Die zwischen zwei Magneten wirkende Kraft ist dabei vom Abstand der Magneten abhängig und nimmt mit zunehmender Distanz stark ab.

Aufgabe der Erfindung ist es, Magnetbefestigungen in Hinsicht auf ihre Handhabung und Verwendung in hygienischen und ergonomischen Anwendungen zu verbessern, insbesondere im Einsatz in kontrollierten Umgebungen.

Zur Lösung der Aufgabe sind erfindungsgemäß die Merkmale des Anspruchs 1 vorgesehen. Insbesondere wird somit erfindungsgemäß bei einer Magnetbefestigung der eingangs beschriebenen Art vorgeschlagen, dass die fixierende Position permanentmagnetisch gesichert ist. Somit ist eine einfach zu lösende und herzustellende Befestigung bereitstellbar.

Die Magnetbefestigung kann dabei zur händischen Bedienung durch einen Benutzer vorgesehen sein. Dabei kann insbesondere vorgesehen sein, dass sich die Magnetbefestigung einhändig Bedienen lässt.

Das Befestigungselement kann dabei dazu vorgesehen sein, in die Basis eingeführt zu werden, wobei dann, insbesondere durch eine Drehung des Befestigungselements zwischen der fixierenden und der freigebenden Position geschaltet werden kann.

Eine freigebende Position kann beispielsweise dadurch charakterisiert sein, dass sich das Befestigungselement in dieser Position mit sehr geringem Kraftaufwand durch einen Benutzer lösen lässt, insbesondere leicht aus der Basis entfernen lässt. Das Befestigungselement kann sich beispielsweise aus der freigebenden Position in eine frei Position, in der es von der Basis gelöst ist, bewegen lassen.

Eine solche Bewegung lässt sich insbesondere durch eine Drehbewegung realisieren.

Eine magnetische Kopplung kann beispielsweise so eingerichtet sein, dass das Befestigungselement selbsttätig aus der freigebenden Position in die fixierende Position übergeht.

Beispielsweise kann eine, beispielsweise die bereits erwähnte, magnetische Kopplung durch eine Ausrichtung von Dipolen unterschiedlicher Permanentmagnete und/oder durch eine Anziehungskraft zwischen zwei Permanentmagneten oder zwei magnetisch aktiven Materialien bewirkt sein.

Die Bewegung des Befestigungselements von der fixierenden in die freigebende Position kann dabei für ein Abscheren der magnetischen Kraft zwischen dem Befestigungselement und der Basis sorgen. Ein Abscheren der Kraft hat dabei gegenüber einer Lösungsbewegung entgegen der magnetischen Kraft zwischen Befestigungselement und Basis insbesondere den Vorteil, dass eine unbeabsichtigt weitreichendere Bewegung (etwa bei einem Abreißen entgegen einer Richtung einer Haltekraft) des Benutzers im Moment des Lösens des Befestigungselements, welche durch das plötzliche Überwinden der magnetischen Anziehungskraft auftreten kann, wirksam verhindert werden kann. Eine Entriegelung kann somit beispielsweise durch eine Bewegung eines Teils der Permanentmagnete gegeneinander, die quer oder transversal zu einer Richtung eine Haltekraft, die in der fixierenden Position ausgeübt wird, ausgerichtet ist.

Insbesondere bezieht sich die Erfindung somit auf ein magnetisches Befestigungssystem, das ein sicheres Anbringen und Lösen von Komponenten ermöglicht, die die hygienische Integrität durch eingeschlossene magnetische Elemente aufrechterhält und eine ergonomische Funktionalität für ein einfaches Anbringen und Entfernen bietet, geeignet für Branchen wie das Gesundheitswesen, die Pharmazie, die Lebensmittelverarbeitung und andere Umgebungen, die einen hohen Standard an Sauberkeit und Sterilität erfordern.

Dabei kann das Befestigungselement insbesondere so gestaltet sein, dass es sich mit einer behandschuhten Hand gut und sicher greifen lassen. Bei einem solchen Handschuh kann es sich beispielsweise um einen Handschuh handeln der an einem Isolator oder einem RABS (restricted access barrier systems) angeordnet ist und dort zur sichern Manipulation im Inneren der kontrollierten Umgebung, insbesondere jener des Isolators, verwendet werden kann. Derartige Handschuhe werden häufig aus Nitril, CSM (Chlorsulfoniertes Polyethylen auch Hypalon Genannt) oder anderen Kunststoffen gefertigt und zeichnen sich durch eine vergleichsweise hohe Dicke aus.

Zur sicheren und bequemen Greifbarkeit, insbesondere mit einer behandschuhten Hand, kann das Befestigungselement an einer Seite, einen Griff aufweisen. Der Griff kann auf einer oberen Seite des Befestigungselements angeordnet sein, insbesondere auf der Seite des Befestigungselements, dass nicht in die Basis eingeführt wird.

Eine mögliche Anwendung der Erfindung ist die Befestigung von Formateilen in aseptischen Produktionseinrichtungen wie beispielsweise Isolatoren.

Formatteile können insbesondre bei Vorrichtungen zum Verarbeiten von pharmazeutischen Behältern oder deren Bestandteilen zum Einsatz kommen, beispielsweise beim Befüllen oder Verschließen solcher Behälter. Die Formatteile können lösbar an ihnen zugeordneten Komponenten einer Vorrichtung festgelegt werden. Komponenten zum Halten von Formatteilen sind beispielsweise an einem Gestell, Unterbau oder dergleichen einer Vorrichtung angeordnet oder von diesem umfasst. Dabei können Formatteil und die Komponente zum Halten des Formatteils zwei Komponenten einer Basis sein, die mittels einer erfindungsgemäßen Magnetbefestigung aneinander befestigt werden. Die Formatteile können Wechselteile sein, die von einem Benutzer abhängig von der durchzuführenden Aufgabe angepasst an die Behälter, deren Bestandteilen und/oder beispielsweise den Befüllvorgang ausgetauscht werden können. Beispielsweise kann das eingesetzte Formatteil von einem Behältertyp abhängen (wie etwa Spritzen, Vials oder Karpulen), aber auch von der der Abmessung eines Behälters (beispielsweise Vials unterschiedlicher Größe) oder der Art und Weise, wie der Behälter zu verschließen ist. Beispielsweise können Formatteile abhängig von dem eingesetzten Schließelement (beispielsweise Pilzstopfen, Kolbenstopfen oder Bördelkappen) eingesetzt werden, um deren Verarbeitung zu ermöglichen. Hierunter ist, wie beispielsweise im Fall der Behälter, nicht nur die Art des Schließelementes zu erwähnen, sondern auch dessen Größe. Andersartige Formatteile können beispielsweise verarbeitungsspezifisch sein. Beispielsweise kommen Formatteile abhängig davon zum Einsatz, welche Substanz in die Behälter zu füllen ist. Unterschiede können sich beispielsweise abhängig davon ergeben, ob die Substanz flüssig oder pulverförmig ist, welche Viskosität eine flüssige Substanz aufweist und/oder mit welcher Menge der Substanz die Behälter zu befüllen sind. Die Verwendung von Formatteilen kann so die Flexibilität von aseptischen Produktionseinrichtungen erhöhen, in dem sie sich schnell an den gewünschten Prozess anpassen lassen. Hierbei ist eine schnelle, sichere und hygienische Befestigung der Formatteile notwendig, was durch die erfindungsgemäße Magnetbefestigung erreicht werden kann.

Alternativ dazu können auch andere Teile, welche nach einer erfolgten Dekontamination der kontrollierten Umgebung, insbesondere eines Isolators, in diesen eingebracht und befestigt oder montiert werden müssen, zur Befestigung mittels der Erfindung geeignet sein. Bei Formatteilen aber auch anderen Teilen die, insbesondere in einem Isolator oder einer sonstigen aseptischen Produktionseinrichtung, befestigt werden können, können zwei Abschnitte definiert werden: ein Schnittstellenabschnitt der immer gleich sein kann, um den schnellen Austausch und die Verwendung gleicher Befestigungselemente zu ermöglichen, sowie einen Funktionsabschnitt, der verschieden sein kann und an die jeweilige Funktion oder Aufgabe des Formatteil oder anderen Teils angepasst sein kann, beispielsweise eine Halte- oder Greifvorrichtung für einen bestimmten Behälter oder ein bestimmtes Werkzeug.

Mit der Erfindung kann eine leicht reinigbare und/oder verschleißarm, insbesondere abriebarm, betreibbare Vorrichtung bildbar sein.

In einer besonders vorteilhaften Ausgestaltung der Erfindung kann vorgesehen sein, dass das Befestigungselement ein Formatteil ist. Bei dem Formatteil kann es sich insbesondere um eine Aufnahme oder eine Halteeinrichtung für einen Behälter handeln. Die Ausrichtung des Formatteils in der fixierenden Position kann dabei durch die Magnetkraft der permanentmagnetischen Sicherung bestimmt sein, was sich besonders vorteilhaft auf die Ausrichtung der Formatteile in der pharmazeutischen Anlage, insbesondere von Aufnahmen für Behälter sein, da auf ein manuelles Ausrichten der Formatteile verzichtet werden kann. Ein solches Formatteil kann dann nach einfacher Drehung von der Basis gelöst werden. So kann der Austausch von Formatteilen in einer pharmazeutischen Anlage vereinfacht werden.

In einer vorteilhaften Ausgestaltung der Erfindung kann vorgesehen sein, dass die Basis aus wenigstens zwei Komponenten besteht. Dabei kann insbesondere vorgesehen sein, dass eine der Komponenten ein Formatteil ist, und dass das Formatteil wechselbar ist. Die andere der wenigstens zwei Komponenten der Basis kann dabei ein Halteteil zur Aufnahme des wechselbaren Formatteils sein. Es kann auch vorgesehen sein, dass die Basis aus mehr als zwei Komponenten besteht oder mehr als zwei Komponenten aufweist, insbesondere wobei mehr als eine Komponente ein Formatteil ist. Beispielsweise können mit der Erfindung zwei Formatteile verbunden werden und gemeinsam an einer dritten Komponente befestigt werden.

Die Formatteile können dabei insbesondere an einer Transporteinrichtung, beispielsweise einem Mover, Roboter, eine Handlingeinheit oder ähnlichem angebracht werden. Die Formatteile können aber auch an stationären Einrichtungen, wie Prozessstationen, beispielsweise Abfüll- oder Verschließstationen, oder ähnlichem angebracht werden. Zusätzlich ist auch denkbar, dass die Formatteile am Isolator oder RABS selber angebracht werden oder Teile direkt mit diesen Verbinden.

In einer weiteren vorteilhaften Ausgestaltung der Erfindung kann vorgesehen sein, dass in der fixierenden Position ein Formschluss zwischen dem Befestigungselement und wenigstens einem Teil der Basis erreicht wird. Dabei kann vorzugsweise ein Formschluss zwischen dem Befestigungselement und allen Komponenten der Basis erreicht werden. In einer besonders vorteilhaften Ausgestaltung kann dabei der Formschluss quer zu einer Einführrichtung des Befestigungselements erreicht werden. Ein Formschluss zwischen Befestigungselement und Basis bei Erreichen der fixierenden Position kann insbesondere beim Einsatz in pharmazeutischen Füllanlagen oder sonstigen aseptischen Umgebungen von Vorteil sein, wenn das Befestigungselement in die Basis, oder einen Teil der Basis eingeführt wird, da so keine Öffnungen an der Basis verbleiben, die anderenfalls die Reinigung der Basis erschweren könnten. Durch einen Formschluss quer zur Einführungsrichtung kann dabei insbesondere auch eine Kraftaufnahme in zwei Richtungen quer zur Einführrichtung durch die Basis erfolgen. Das Befestigungselement kann so eine einwirkende Kraft besonders gut an die Basis übertragen. Es kann so gegeben sein, dass sich mit dem Befestigungselement auch schwere Teile, insbesondere Formatteile, oder Teile welche, insbesondere wechselnden, Beschleunigungen ausgesetzt sind, sichern lassen.

Die magnetischen Elemente sind bei vorteilhafter Ausgestaltung der Erfindung so angeordnet, dass das Befestigungselement wenigstens einen Permanentmagneten oder wenigstens ein ferromagnetisches Element und die Basis, insbesondere ein Teil der Basis, wenigstens einen Permanentmagneten oder wenigstens ein ferromagnetisches Element enthält. Dabei können die Permanentmagneten oder ferromagnetischen Elemente der in der Basis oder dem vom Griff entfernten Teil des Befestigungselements angeordnet sein, wobei nur die Basis oder nur das Befestigungselement oder beide, Permanentmagneten oder ferromagnetische Elemente enthält oder enthalten.

Enthalten dabei die Basis oder das Befestigungselement ein ferromagnetisches Element, kann es besonders vorteilhaft sein, wenn das ferromagnetische Element Schlitze oder Kerbenaufweist oder auf sonstige Weise strukturiert ist, um eine Vorzugsrichtung für magnetische Feldlinien auszuzeichnen, insbesondere wobei die Schlitze oder Kerben oder die sonstigen Strukturelemente in der fixierenden Position längs zu dem magnetischen Dipol eines Permanentmagneten im Gegenstück ausgerichtet sein können, was die magnetische Anziehungskraft zwischen Permanentmagnet und ferromagnetischem Element erhöht. In der freigebenden Position können die Schlitze oder Kerben oder sonstigen Strukturelemente quer zu dem magnetischen Dipol eines Permanentmagneten im Gegenstück ausgerichtet sein, wodurch sich die magnetische Wechselwirkung abschwächt und sich das Befestigungselement leichter lösen lassen kann. Bei einem solchen ferromagnetischen Element kann es sich beispielsweise um ein strukturiertes ferromagnetisches Metallblech handeln.

In einer besonders vorteilhaften Ausgestaltung der Erfindung kann vorgesehen sein, dass das Befestigungselement und die Basis je wenigstens einen Permanentmagneten enthalten wobei in der fixierenden Position die Permanentmagneten so angeordnet sind, dass die Permanentmagneten versetzt zueinander positioniert sind. In einer bevorzugten Ausführungsform können die Permanentmagneten diametral zueinander positioniert sein.

Dabei können beide Magnete so angeordnet sein, dass sich ein magnetischer Fluss zwischen den Magneten ausbilden kann. Da der magnetische Fluss eine Schleife bildet, kann er somit eine hohe Anziehungskraft zwischen den beiden Magneten erzeugen. Diese Kraft kann größer als die von herkömmlichen Magneten sein, die nur eine Anziehung zwischen ihren Nord- und Südpolen erzeugen. Bei der Konfiguration in der vorliegenden Erfindung kann beispielsweise ein magnetischer Kreis erzeugt werden, der eine stärkere und zuverlässigere Anziehungskraft besitzt, was eine sichere Befestigung gewährleisten kann.

Durch das Drehen des Befestigungsteils kann der magnetische Fluss umgekehrt werden. Wenn das Befestigungselement um eine einzelne Achse innerhalb der Basis gedreht wird, ändert sich die Richtung der Magnetkraft von Anziehung zu Abstoßung gegenüber der Basis, sodass der Benutzer den Verschluss mit minimalem Kraftaufwand lösen kann. Diese Funktion ist besonders vorteilhaft im Vergleich zum Einsatz von nur zwei Magneten oder eines Magneten und eines Ferromagnetischen Elements, bei dem nur Nordpol auf Südpol gelegt wird und die manuelle Lösung entlang dieser Verbindung und somit genau entgegen des verbindenden Kraftflusses erfolgt. Dabei kann es bekanntermaßen zu einem Abreißen kommen, wodurch oft eine Bewegung weiter als eigentlich gewollt ausgeführt wird. Durch Drehen des Befestigungselements zwischen 0° und 180° kann der Benutzer den Verschluss schnell und einfach lösen, ohne in der beispielsweise direkten Wirklinie gegen die Anziehungskraft ankämpfen zu müssen.

Durch die Möglichkeit, die Ausrichtung wenigstens eines Magneten zu ändern und somit die Ausrichtung wenigstens eines Dipols zu ändern, ändern sich auch die Feldlinien des Systems, sodass die Anziehung zwischen den beiden Permanentmagneten aufgehoben wird, oder in eine abstoßende Kraft geändert wird, bietet die Erfindung einen ergonomischen Vorteil gegenüber Befestigungsmethoden, die ein Gewinde nutzen. Das System erfordert nur eine 0°- bis 180°-Drehung, um das Befestigungselement zu befestigen oder zu lösen, während bei Befestigungssystem mit Gewinde in der Regel mehrere Umdrehungen erfordern, um ein Befestigungselement zu befestigen oder zu lösen.

Wenn die Basis zwei gegenüberliegende Permanentmagneten oder ferromagnetische Elemente aufweist, kann eine Drehung des Befestigungselements um 90 ° besonders vorteilhaft sein, um die Haltekraft zu überwinden. Bei einer Drehung um mehr als 90° kann es dann zu einer abstoßenden Kraft zwischen dem Befestigungselement und der Basis kommen, die eine weitere Drehung, beispielsweise um 180 °, erschweren kann. Weiter führt die Drehung des Befestigungselements, insbesondere wenn es in axialer Richtung einen Anschlag in der Basis hat, zu einem Herausheben/Herausdrücken aufgrund der Magnetkräfte.

Bei einer vorteilhaften Ausgestaltung der Erfindung kann vorgesehen sein, dass wenigstens an einer Polseite eines Permanentmagneten eine Stahlplatte, zur Erhöhung eines magnetischen Flusses, angebracht ist. Die erhöhte magnetische Anziehungskraft kann dabei die Verwendung von kleineren Magneten ermöglichen und/oder die magnetische Kraft zwischen dem Befestigungselement und der Basis in der fixierenden Position erhöhen.

In einer weiteren Ausgestaltung der Erfindung kann vorgesehen sein, dass wenigstens ein Permanentmagnet kubisch ausgeformt ist. Es kann auch vorgesehen sein, dass wenigstens ein Permanentmagnet tonnenförmig ausgeformt ist. Es kann weiterhin vorgesehen sein, dass wenigstens ein Permanentmagnet scheibenförmig ausgeformt ist. Die Verwendung von kubischen Magneten kann vorteilhaft sein, da sie einfach in den Herstellungsprozess integriert werden können. Die genannten Formen der Permanentmagneten bieten den Vorteil klar definierter Pole, was die optimale Ausrichtung der Magneten zueinander erleichtern kann. Tonnenförmige und/oder scheibenförmige Permanentmagneten können sich dabei vorteilhaft auf die realisierbaren Formen von Befestigungselement und/oder Basis auswirken.

Bei einer vorteilhaften Ausgestaltung der Erfindung kann vorgesehen sein, dass das Befestigungselement teilweise, insbesondere vorzugsweise, vollständig mit einem thermisch- und chemisch widerstandsfähigen Kunststoff, beispielsweisePVDF (Polyvinylidenfluorid), eingehaust ist. Alternativ oder zusätzlich kann das Befestigungselement auch mit magnetisch neutralem Stahl, insbesondere Edelstahl, eingehaust sein. Weiterhin sind Einhausungen aus Silikon, Polyvinylchlorid (PVC), Polypropylen (PP), Polyetheretherketon (PEEK) oder anderen Kunststoffen möglich. Eingehaust bedeutet dabei, dass das Befestigungselement dabei vollständig durch eines der zuvor genannten Materialien umgeben, insbesondere ummantelt ist. Diese Ummantelung kann dabei aus mehreren miteinander verschweißten, zueinander abgedichteten oder andersartig formschlüssig verbundenen Teilen bestehen, oder einstückig ausgeformt sein. Dadurch kann eine einfache Reinigung bzw. Desinfektion der Magnetbefestigung ermöglicht werden. Vorteilhaft ist es, wenn der verwendete Kunststoff oder Stahl für die Verwendung gängiger Desinfektionsmittel, sowie für die Sterilisation in einem Dampfsterilisator geeignet ist.

Als Alternative zur Einhausung ist auch eine Beschichtung der oder des Elements denkbar.

Bei einer besonders vorteilhaften Ausgestaltung kann vorgesehen sein, dass das Befestigungselement bei Zusammenführung mit der Basis durch magnetische Anziehung in eine fixierende Position gebracht und gehalten wird. Diese fixierende Position kann dabei vom Befestigungselement aufgrund der magnetischen Anziehung mit der Basis automatisch eingenommen werden, unabhängig in welcher Position das Zusammenführen der Elemente durch den Benutzer erfolgt. Dies kann ein äußerst schnelle und bequeme Befestigung ermöglichen.

Bei einer weiteren vorteilhaften Ausgestaltung der Erfindung kann vorgesehen sein, dass eine Drehung des Befestigungselements gegen die Basis zur Schwächung der magnetischen Anziehung führt und ein leichtes Lösen der Befestigung ermöglicht. Bei der Erfindungsgemäßen Anordnung der Permanentmagneten, oder eines Permanentmagneten und eines magnetisierbaren Gegenstücks, wird durch Drehung des Befestigungselements um 0° und bis zu 270°, bevorzugt genau 90 ° oder 180 °, die magnetische Anziehung zwischen dem Permanentmagneten oder einem Permanentmagneten und einem magnetisierbarem Metallelement verringert, was ein leichtes Lösen des Befestigungselements ermöglicht. Die Drehung des Befestigungselements kann dabei durch einen Benutzer manuell, insbesondere händisch erfolgen. Insbesondere kann das Befestigungselement so gestaltet sein, dass es sich auch mit einem Handschuh wie er beispielsweise in Isolatoren verwendet wird, sicher und einfach greifen lässt. Die Drehung des Befestigungselements kann dabei um die eigene Achse, beispielsweise die Achse die durch das Zentrum eines, insbesondere drehsymmetrischen, Befestigungselements verläuft, erfolgen. Die Drehung kann aber auch um eine Achse erfolgen, die außerhalb des Befestigungselements verläuft. Insbesondere kann also die Schwächung der magnetischen Anziehung zwischen Befestigungselement und Basis auch durch eine Kippbewegung des Befestigungselements erfolgen. Die Basis kann dabei starr bleiben.

Bei einer weiteren Vorteilhaften Ausgestaltung der Erfindung kann vorgesehen sein, dass die Basis eine Sackbohrung aufweist, die ein ferromagnetisches Element oder einen Permanentmagneten enthält, in die das Befestigungselement eingeführt werden kann. Das Befestigungselement und die Basis enthalten dabei jeweils wenigstens einen Permanentmagneten als magnetisches Element. Die magnetischen Elemente im Befestigungselement und der Basis können dabei so angeordnet sein, dass sie bei eingesteckten Befestigungselement direkt übereinander liegen, um so eine optimale magnetische Anziehung zu bewirken. Wenn das Befestigungselement in die Basis eingesetzt wird, bildet der Magnetfluss eine geschlossene Schleife zwischen dem Permanentmagneten oder ferromagnetischem Element im Befestigungselement und dem Permanentmagneten oder ferromagnetischem Element in der Basis. Diese Konfiguration sorgt für eine starke magnetische Anziehung, die das Befestigungselement sicher an seinem Platz halten kann. Die Magnetkraft kann umgekehrt werden, indem das Befestigungselement in der Basis gedreht wird, wodurch sich die Richtung des Magnetfelds ändert. Dadurch kann der Benutzer das Befestigungselement durch einfaches Drehen um einige Grad lösen und leicht von der Basis entfernen.

Bei einer weiteren Vorteilhaften Ausgestaltung der Erfindung kann vorgesehen sein, dass wenigstens ein Teil der Basis, insbesondere eine der wenigstens zwei Komponenten, eine Durchgangsbohrung aufweist, in die das Befestigungselement eingeführt werden kann.

Alternativ oder zusätzlich kann vorgesehen sein, dass wenigstens ein Teil, beispielsweise der bereits beschriebene wenigstens eine Teil, insbesondere wenigstens eine der wenigstens zwei Komponenten, eine Durchgangsbohrung aufweist. Somit ist eine formschlüssige Sicherung in allen Richtungen quer zu einer Einsetzrichtung des Befestigungsteils möglich.

Hierbei oder alternativ kann vorgesehen sein, dass ein Teil, beispielsweise der andere Teil, insbesondere eine (andere) der wenigstens zwei Komponenten, eine Auskragung an einem Vorsprung aufweist. Somit ist eine einfache formschlüssige Befestigung erreichbar.

Dabei kann es vorteilhaft sein, wenn auf den gegenüberliegenden Seiten der Bohrung jeweils ein Permanentmagnet angebracht ist. Die Permanentmagneten können dabei so angeordnet sein, dass sich gegensätzliche Polseiten gegenüberliegen. Die Bohrung kann dann zur Aufnahme des Befestigungselements dienen, wobei in der fixierenden Position der Permanentmagnet des Befestigungselements so angeordnet ist, dass jeweils eine anziehende Wechselwirkung mit den beiden Permanentmagneten der Basis ermöglicht wird. Diese Anordnung erzeugt einen magnetischen Flusskreis durch die drei magnetischen Elemente (die beiden Permanentmagnete in der Basis und dem Permanentmagnet im Befestigungselement). Durch eine Auskragung an einer der wenigstens zwei Komponenten der Basis kann insbesondere die Befestigung, beziehungsweise ein Halten, dieser Komponente quer zur Einsetzrichtung des Befestigungselements realisiert werden.

Wenn das Befestigungselement in die Basis eingesetzt wird, interagieren die Nord- und Südpole der Magnete im Befestigungselement mit den Polen der Magnete in der Basis und bilden einen starken Magnetkreis. Durch Drehung des Befestigungselements wird die Richtung der Magnetkraft verändert, sodass je nach Drehrichtung entweder Anziehung oder Abstoßung entstehen. Dadurch kann das Befestigungselement sowohl sicher befestigt als auch leicht entfernt werden.

Bei einer weiteren Vorteilhaften Ausgestaltung der Erfindung kann vorgesehen sein, dass die Basis eine Erhöhung, beispielsweise eine zylindrische Erhöhung, aufweist, auf welche das Befestigungselement aufgesteckt werden kann. In dieser Ausgestaltung weist das Befestigungselement eine Sackbohrung auf, welche dem Durchmesser der zylindrischen Erhöhung der Basis entspricht. Das Befestigungselement enthält des Weiteren einen Permanentmagneten, welcher oberhalb der Sackbohrung angebracht ist. Das Befestigungselement kann so auf die Basis aufgesteckt werden, wobei die Pole der Magnete in der Basis und dem Befestigungselement so ausgerichtet sind, dass sie einen magnetischen Flusskreis zwischen den beiden Teilen erzeugen. Wenn das Befestigungselement innerhalb der Basis gedreht wird, bewirkt die Wechselwirkung zwischen den Magneten, dass die magnetische Anziehung zu einer Abstoßung wird, sodass das Befestigungselement leicht gelöst werden kann. Die Drehung bietet einen einfachen und effizienten Mechanismus zum Anbringen und Abnehmen der Komponenten.

Bei einer vorteilhaften Ausgestaltung der Erfindung kann vorgesehen sein, dass das Befestigungselement und/oder die Basis und dabei besonders die darin enthaltenen Permanentmagneten, für die Reinigung oder Desinfektion in einem Dampfsterilisator oder Autoklaven geeignet sind. Die Magnetisierung der Permanentmagneten kann dabei auch bei einer Temperatur von wenigstens 100 ° erhalten bleiben. In einer bevorzugten Ausführungsform bleibt die Magnetisierung der Permanentmagneten auch bei einer typischen Sterilisationstemperatur oder einer Temperatur von wenigstens 121 °C erhalten. Eine Stabilität gegenüber Sterilisationstemperaturen kann vorteilhaft für die einfache und sichere Desinfektion der Elemente der Magnetbefestigung sein, wie sie beispielsweise in aseptischen Produktionsanlagen eine wichtige Rolle spielt. Ein Erhalten der Magnetisierung kann dabei insbesondere bedeuten, dass die Vorzugsrichtung der Magnetisierung erhalten bleibt. Solche Hochtemperaturbeständige Magneten sind beispielsweise Samarium-Kobalt (SmCo) Magneten.

In einer besonders vorteilhaften Ausgestaltung der Erfindung kann vorgesehen sein, dass das Befestigungselement in der fixierenden Position zusätzlich durch einen Bajonettverschluss gesichert ist. Dazu kann sich am unteren Ende des Befestigungselements eine Verbreiterung befinden. Bei der Drehung des Befestigungselements in die fixierende Position, kann die Verbreiterung dabei so positioniert werden, dass sie sich in dieser Position nicht mehr aus der Basis herausziehen lässt, also nach der Art eines Bajonettverschlusses in der Basis gesichert ist. Die Basis kann dabei so gestaltet sein, dass das Befestigungselement in der fixierenden Position nicht aus der Basis entfernt werden kann, beispielsweise dadurch, dass eine Verbreiterung am Ende des Befestigungselements so in der Basis gedreht wird, dass ein herausrutschen des Befestigungselements wirksam verhindert wird. Dabei kann die Verbreiterung zusätzlich einen Permanentmagneten oder ein Element aus einem magnetisierbaren Metall enthalten. Als Basis dient dabei eine Vertiefung ähnlich einem Schlüsselloch, welche ihrerseits ein magnetisches oder magnetisierbares Element enthalten kann. Zusätzlich kann das Befestigungselement an der Verbreiterung dabei magnetisch gehalten werden. Ein Vorteil einer derartigen Ausgestaltung kann sein, dass zusätzlich zur magnetischen Haltekraft des Befestigungselements auch die mechanische Haltekraft des Befestigungselements in der Basis genutzt werden kann. Das Befestigungselement kann so zum Halten von schwereren und/oder beschleunigten Gegenständen und Teilen geeignet sein. Insbesondere wird dadurch eine Befestigung, der ersten Komponente zur zweiten Komponente der Basis, in allen Achsen und Drehrichtungen ermöglicht.

Bei der vorliegenden Erfindung wird somit eine Magnetbefestigung, bestehend aus einer Basis und einem Befestigungselement vorgeschlagen, welche zwischen einer fixierenden und einer freigebenden Position geschaltet werden kann und so ein sicheres Befestigen und Lösen von Komponenten durch magnetische Anziehung ermöglicht sowie eine effiziente und ergonomische Lösung für die Befestigung bietet. Dabei ist die fixierende Position permanentmagnetisch gesichert. Die magnetischen Elemente, beispielsweise Permanentmagneten in Basis und Befestigungselement, können dabei einen magnetischen Flusskreis bilden. Die Anziehungskraft kann durch Drehen des Befestigungselements in der Basis umgekehrt werden, wodurch entweder magnetische Anziehung oder Abstoßung erzeugt wird, was eine einfache Montage und Demontage ermöglichen kann. Die Vorrichtung ist nach hygienischen und aseptischen Gesichtspunkten konzipiert und verfügt über geschlossene magnetische Elemente, die eine Verunreinigung verhindern und Sauberkeit gewährleisten. Sie eignet sich somit besonders für Anwendungen, die hohe Anforderungen an Sterilität und Effizienz stellen. Es werden verschiedene Ausführungsformen der Vorrichtung vorgeschlagen, darunter Konfigurationen mit Sackbohrungen, zylindrischen Merkmalen und Durchgangsbohrungen in der Basis, sowie Bajonettverschlüssen zwischen Basis und Befestigungselement, die jeweils für eine sichere Befestigung und eine einfache Entfernung optimiert sind.

Die Erfindung wird nun anhand verschiedener Ausführungsbeispiele näher beschrieben, ist jedoch nicht auf die Ausführungsbeispiele beschränk. Weitere Ausführungsbeispiele ergeben sich durch die Kombination der Merkmale einzelner oder mehrerer Ansprüche untereinander und oder mit einzelnen oder mehreren Merkmalen des Ausführungsbeispiels.

Es zeigt
- Fig. 1: eine Explosionsdarstellung einer Magnetbefestigung mit Sackbohrung in der Basis,
- Fig. 2: eine Explosionsdarstellung einer Magnetbefestigung mit seitlicher Bohrung in der Basis,
- Fig. 3: eine Explosionsdarstellung einer Magnetbefestigung mit zylindrischer Erhöhung der Basis,

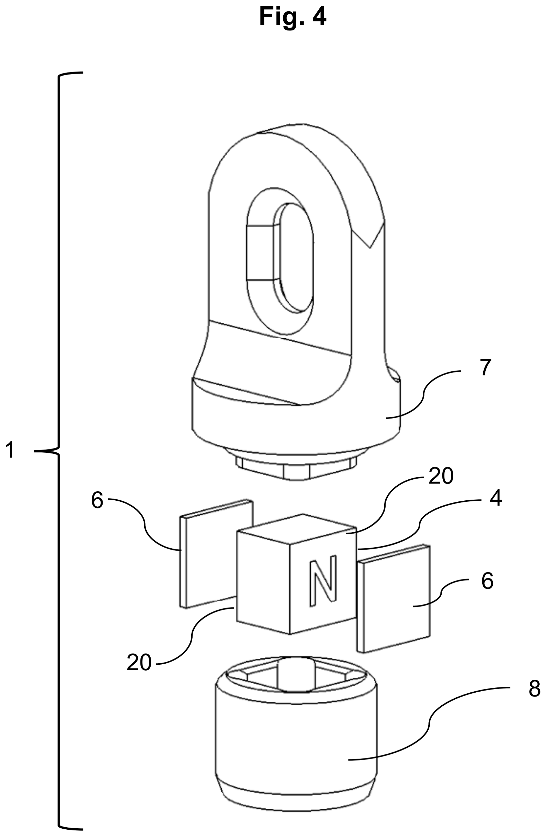

- Fig. 4: eine Explosionsdarstellung eines Befestigungselements zum Einstecken in eine Bohrung,
- Fig. 5: eine zweidimensionale Schnittdarstellung einer Magnetbefestigung mit Durchgangsbohrung, wie im Ausführungsbeispiel aus Fig. 2,
- Fig. 6: eine zweidimensionale Schnittdarstellung einer Magnetbefestigung mit Sackbohrung, wie im Ausführungsbeispiel aus Fig. 1,
- Fig. 7: eine zweidimensionale Schnittdarstellung einer Magnetbefestigung mit zylindrischer Erhöhung der Basis,
- Fig. 8: eine schematische Darstellung der Funktionsweise des Befestigungselements mit einer Sackbohrung.
- Fig. 9: eine schematische Darstellung der Funktionsweise der Magnetbefestigung mit einer Durchgangsbohrung und einem Bajonettverschluss,
- Fig. 10: isometrische Darstellung eines Befestigungselement mit Verbreiterung für einen Bajonettverschluss,
- Fig. 11: Schnittdarstellung der Magnetbefestigung eingesetzt in die Basis, mit Auskragung an einer Komponente der Basis,
- Fig. 12: die Magnetbefestigung aus Figur 11 in einer teiltransparenten Draufsicht,
- Fig. 13: die Magnetbefestigung ähnlich der aus Figur 11 mit zwei Permanentmagneten in der Basis,
- Fig. 14: die Komponente der Basis mit Auskragung der Magnetbefestigung aus Figur 13 in einer Detailansicht,
- Fig. 15: ein weiteres Ausführungsbeispiel einer erfindungsgemäßen Magnetbefestigung,
- Fig. 16: ein weiteres Ausführungsbeispiel einer erfindungsgemäßen Magnetbefestigung, wobei das Befestigungselement ein Formatteil ist,
- Fig. 17: ein weiteres Ausführungsbeispiel einer erfindungsgemäßen Magnetbefestigung, wobei das Befestigungselement ein ferromagnetisches Element enthält und
- Fig. 18: ein weiteres Ausführungsbeispiel, ähnlich Fig. 17, wobei die Basis nur einen Permanentmagneten enthält.

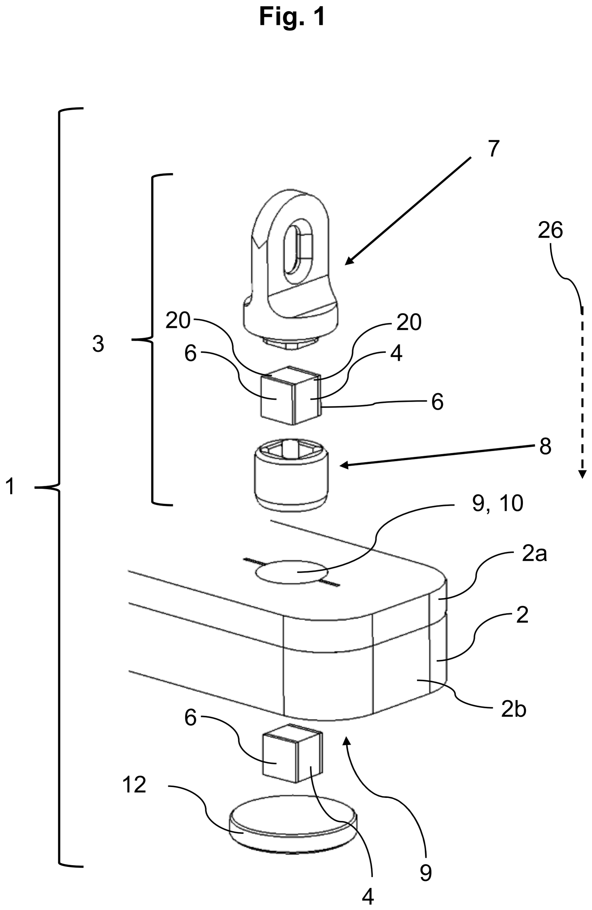

Figur 1 zeigt eine Magnetbefestigung 1 zur Anordnung in einer pharmazeutischen Anlage mit kontrollierter Umgebung, bei der das Befestigungselement 3 in eine Sackbohrung 9 der Basis 2 eingesteckt werden kann. Die Sackbohrung 9 der Basis 2 ist dabei durch die Komponente 2a durchgängig, stellt hier also eine Durchgangsbohrung 10 dar. Bei der Komponente 2a kann es sich insbesondere um ein Formatteil handeln, welches an der Komponente 2b der Basis 2 befestigt wird. Im Befestigungselement 3 und der Komponente 2b Basis 2 ist jeweils ein Permanentmagnet 4 angebracht, wobei die Polseiten 20 mit einer Stahlplatte 6 abgedeckt sind. Das Befestigungselement 3 besteht aus einem oberen Teil 7, welches auch als Griff zum manuellen Einsetzen und Drehen dient, und einem unteren Teil 8 welches den Permanentmagneten 4 aufnimmt. Die Sackbohrung 9 der Komponente 2b der Basis 2 ist durch einen Verschluss 12 verschlossen. Das magnetische Element, in Form eines Permanentmagneten 4, der Basis 2 befindet sich oberhalb dieses Verschlusses 12.

Im Ausführungsbeispiel erstreckt sich die erste Sackbohrung 9 durch beide Komponenten 2a und 2b der Basis 2. Im Fall der Komponente 2a stellt die Sackbohrung 9 im Ausführungsbeispiel eine Durchgangsbohrung 10 dar. Der Permanentmagnet 4 der Basis 2 ist auf dem Verschluss 12 fest angebracht.

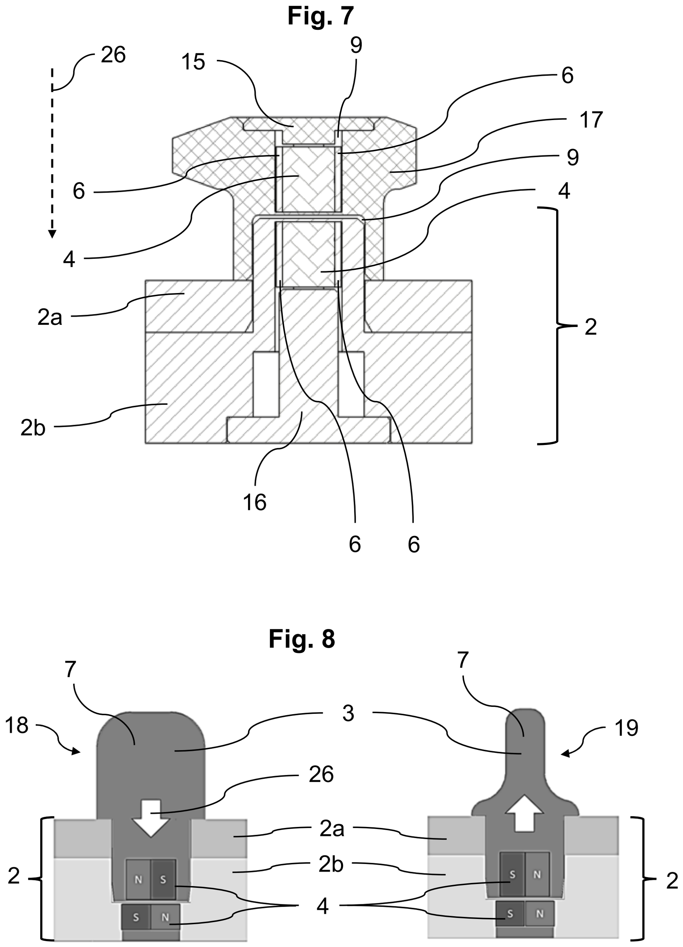

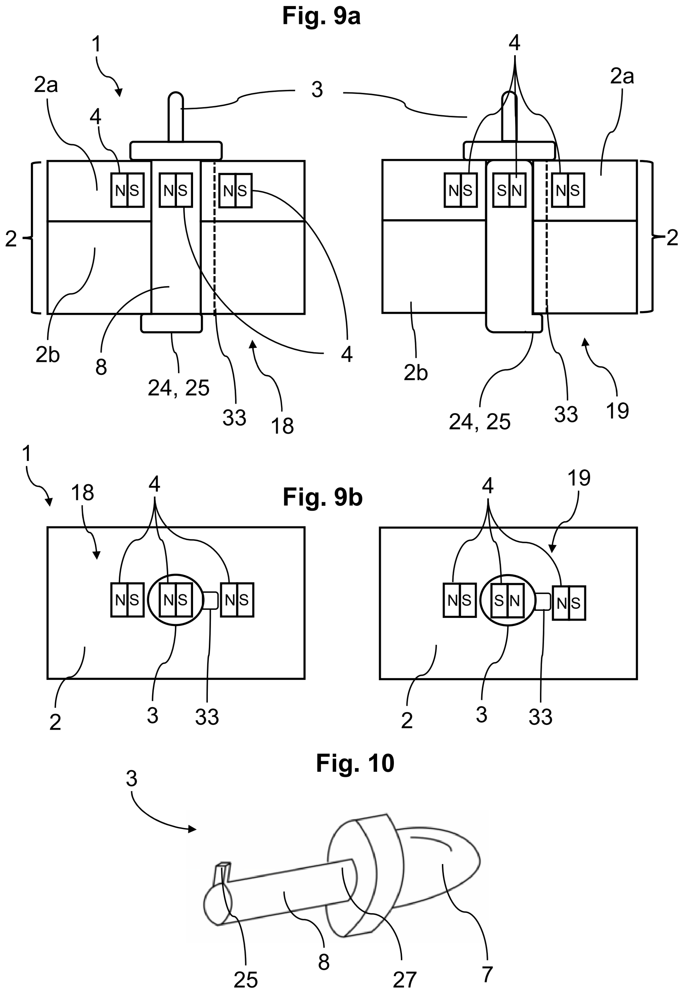

Die Magnetbefestigung 1 besteht dabei aus einer Basis 2 und einem Befestigungselement 3, wobei das Befestigungselement 3 in der Einführungsrichtung 26 in die Basis 2 eingeführt werden kann. Das Befestigungselement 3 kann zwischen einer fixierenden Position 18 und einer freigebenden Position 19 geschaltet werden, wie in Figur 8 und Figur 9 dargestellt. Die fixierende Position 18 ist dabei permanentmagnetisch gesichert.

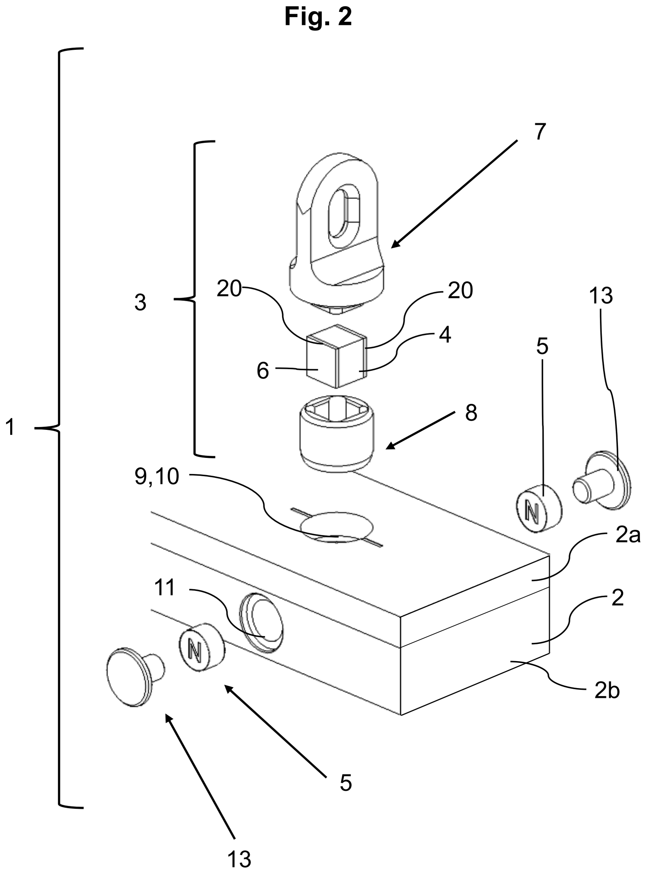

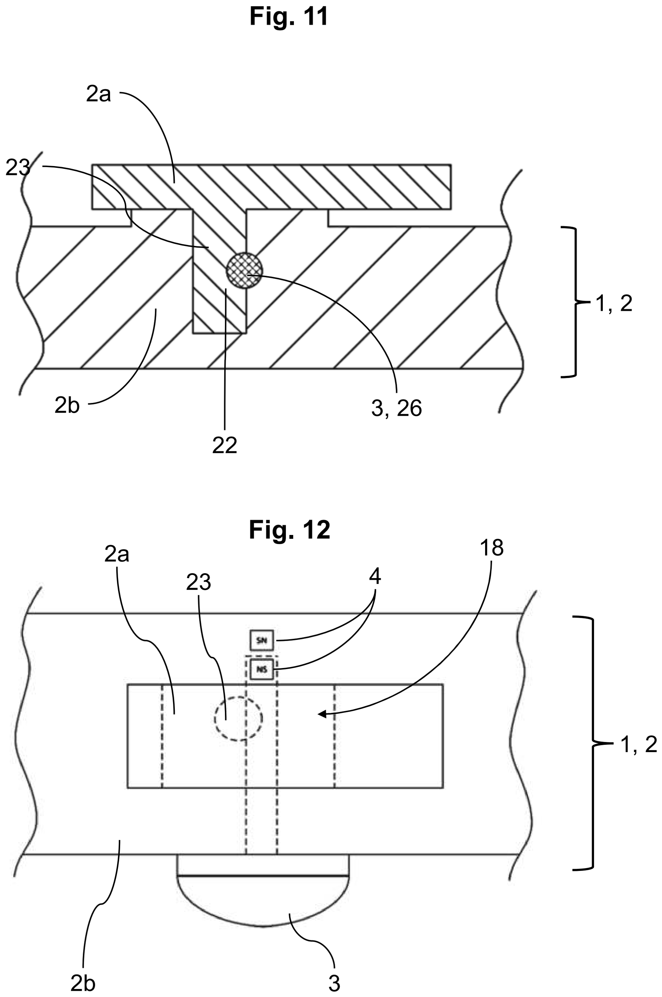

Die Basis 2 kann dabei aus wenigstens zwei Komponenten 2a und 2b bestehen, wie es unter anderem die Figuren 1 und 2 zeigen. Die Figuren 11 und 12 zeigen dabei die Komponente 2a als wechselbares Formatteil.

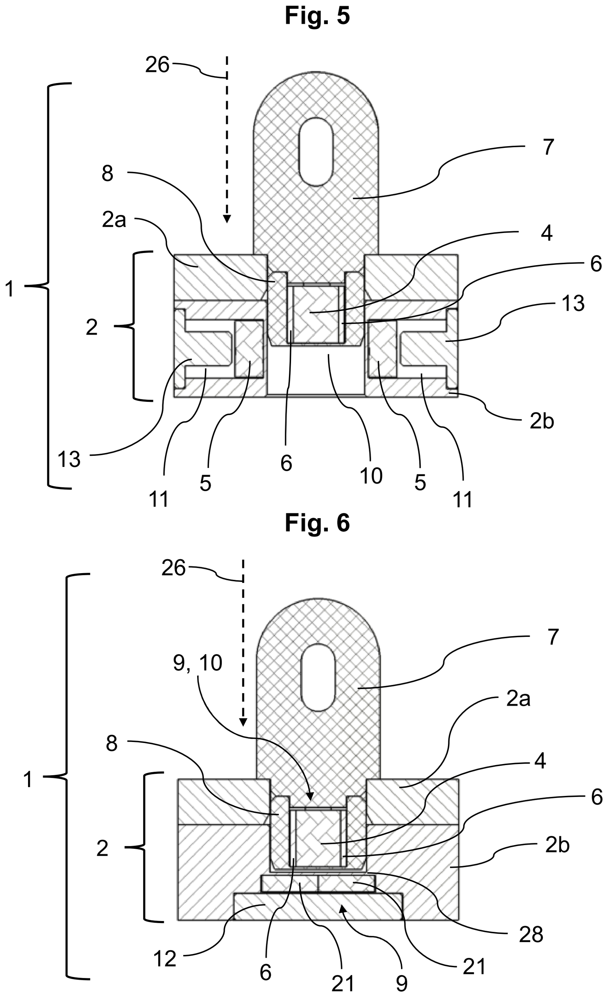

In den Figuren 5-9 ist zu erkennen, dass in der fixierenden Position 18 ein Formschluss in zumindest einer, insbesondere zwei oder mehr Richtungen und/oder Drehachsen, zwischen dem Befestigungselement 3 und der Basis 2 und/oder zwischen der ersten Komponente und der Zweiten Komponente, besteht. In den Figuren 5, 6 und 8 besteht dieser Formschluss zwischen dem Befestigungselement 3 und den Komponenten 2a und 2b der Basis 2, wobei der Formschluss quer zur Einführungsrichtung 26 des Befestigungselements 3 erreicht wird.

Beim Einstecken des Befestigungselements 3 in die Basis 2 richtet sich das Befestigungselement 3 so aus, dass sich zwischen dem Permanentmagneten 4 in der Basis 2 und dem in dem Befestigungselement 3 ein gemeinsamer magnetischer Fluss ausbildet, der eine hohe Anziehungskraft hat. Die fixierende Position 18 des Befestigungselements wird so permanentmagnetisch gesichert. Eine Drehung des Befestigungselements bewirkt eine Umkehr des magnetischen Flusses und eine abstoßende Wechselwirkung zwischen den beiden Magneten 4. Daraus resultiert eine freigebende Position 19, dargestellt in den Figuren 8 und 9.

In Figur 6 ist ein weiteres Ausführungsbeispiel der Magnetbefestigung 1 dargestellt. Die Basis 2, insbesondere Komponente 2b, weist eine Sackbohrung auf in die das Befestigungselement 3 eingesteckt werden kann. Das Befestigungselement 3 enthält einen Permanentmagneten 4 im unteren Teil 8. Eine weitere Sackbohrung 9 der Basis 2, an Komponente 2b, gegenüber der Sackbohrung 9, weist am Boden ein ferromagnetisches Element 21, beispielsweise eine Metalllamelle, auf. Das untere Ende der Sackbohrung ist mit einem Verschluss 12 verschlossen.

Die Basis 2 des Ausführungsbeispiel weist somit zwei Sackbohrungen 9 auf, wobei die obere Sackbohrung 9 im Bezug auf die Komponente 2a der Basis 2 eine Durchgangsbohrung 10 darstellt. Zwischen der ersten Sackbohrung 9 und der zweiten Sackbohrung 9 befindet sich in der Komponente 2b der Basis 2 eine Zwischenwand 28, die die beiden Sackbohrungen 9 voneinander trennt. Im eingesetzten Zustand des Befestigungselements 3 in die Basis 2 trennt die Zwischenwand 28 die Permanentmagneten 4 in Basis 2 und Befestigungselement 3.

Die in Figur 8 dargestellte schematische Darstellung der Funktionsweise zeigt, wie in einer fixierenden Position 18 die Permanentmagneten 4 der Basis 2 und des Befestigungselements 3 durch den magnetischen Fluss eine starke anziehende Kraft zwischen beiden Permanentmagneten 4 ausbilden. Drehung des Befestigungselements um 180 ° führt in der freigebenden Position19 zu einer Abstoßenden Kraft zwischen den beiden Permanentmagneten 4, da hier die Pole parallel zueinander ausgerichtet sind. Das Befestigungselement 3 lässt sich so einfach lösen ohne das die anziehende Kraft der Magneten händisch überwunden werden muss.

Die Ausrichtung des oberen Teils 7 des Befestigungselements 3 ist im gezeigten Ausführungsbeispiel nicht korrekt dargestellt, während die Ausrichtungen der Permanentmagneten 4 im rechten Teil der Figur 8 eine Drehung 180 ° zeigt, ist der obere Teil 7 des Befestigungselements 3 nur um 90 ° gedreht.

Im Ausführungsbeispiel der Figur 9 entspricht die Darstellung der Ausrichtung des oberen Teil 7 des Befestigungselements 3 denen der Permanentmagneten 4 sowohl in der fixierenden Position 18 und der freigebenden Position 19.

Figuren 2 und 5 zeigen eine Magnetbefestigung 1 bei der die Basis 2 eine Durchgangsbohrung 10 aufweist. Die Bohrung der Basis 2 kann im Ausführungsbeispiel, bezogen auf die Komponente 2b der Basis 2, auch als Sackbohrung 9 ausgestaltet sein.

Bei einem weiteren Ausführungsbeispiel weist das Befestigungselement 3 eine Sack- oder Durchgangsbohrung auf, in die ein Zapfen der Basis 2 eingreift.

An zwei Seiten der Durchgangsbohrung sind in den Figuren 2 und 5 seitliche Permanentmagneten 5 angebracht, insbesondere genau gegenüber einander (180° versetzt), wobei die Pole der beiden seitlichen Permanentmagneten 5 in dieselbe Richtung weisen, sodass am Rand der Durchgangsbohrung 10 je ein magnetischer Süd- und ein Nordpol angeordnet ist. In die Durchgangsbohrung 10 kann dann ein Befestigungselement 3 eingesteckt werden, welches einen weiteren Permanentmagneten 4 enthält, der auf den Polseiten 20 von Stahlplatten 6 bedeckt ist. In der fixierenden Position ist eine starke anziehende Kraft zwischen den magnetischen Elementen 4 und 5 ausgebildet, welche sich durch Drehung des Befestigungselements 3 umkehren lässt, und so ein leichtes Lösen des Befestigungselements 3 ermöglicht.

Bei den Ausführungsbeispielen in den Figuren 2 und 5 sind in der Komponente 2b der Basis 2 jeweils zwei Permanentmagneten 4, einer auf jeder Seite der Sackbohrung 9, angeordnet. In weiteren nicht gezeigten Ausführungsbeispielen kann auch nur auf einer Seite der Sackbohrung 9 ein einziger Permanentmagnet 4 in der Komponente 2b der Basis 2 angeordnet sein.

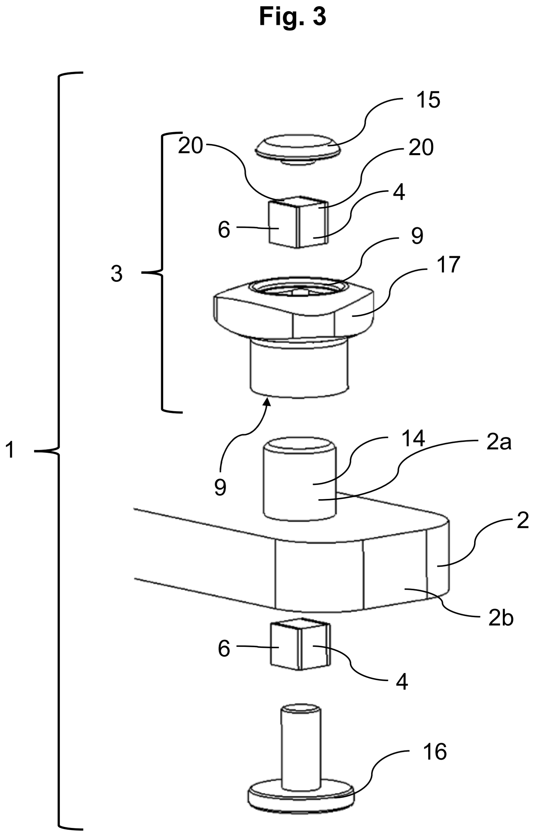

In den Figuren 3 und 7 ist ein weiteres Ausführungsbeispiel der Magnetbefestigung 1 gezeigt, bei der die Basis 2 eine zylindrische Erhöhung 14 aufweist. Das Befestigungselement 3 ist hier als Befestigungselement mit Sackbohrungen 17 ausgeführt, welches im oberen, sowie im unteren Teil je eine Sackbohrung 9 aufweist. Die obere Sackbohrung 9 dient dabei zur Aufnahme des Permanentmagneten 4 und den polseitig flankierenden Stahlplatten 6. Die obere Sackbohrung 9 wird mit einer Abdeckung 15 verschlossen, um den Magneten sicher und hygienisch einzuschließen. Das Befestigungselement 3 kann mittels der unteren Sackbohrung 9 auf die Erhöhung 14 aufgesteckt werden. Zwischen der Basis 2b und dem Befestigungselement 3 ist noch das zu fixierende Teil 2a eingesetzt.

In der Erhöhung 14 ist ein weiterer Permanentmagnet 4 angeordnet. Die Erhöhung 14 wird mit einem zylindrischen Verschluss 16 verschlossen. Die Permanentmagneten 4 sind dabei so angeordnet wie zuvor beschrieben, und die fixierende Position wird permanentmagnetisch gesichert. Eine Drehung des Befestigungselements 3 bewirkt eine Abstoßung der Magneten in Befestigungselement 3 und Basis 2 und ermöglicht ein einfaches Lösen des Befestigungselements 3.

Die Figur 9a zeigt ein weiteres Ausgestaltungsbeispiel der Magnetbefestigung 1. Auf der linken Seite der Figur 9a ist das Befestigungselement 3 in der fixierenden Position 18 angeordnet und dabei in die Basis 2 mit den Komponenten 2a und 2b eingeführt, so dass ein Formschluss zwischen Befestigungselement 3 und Basis 2 erreicht ist. Die Basis 2 weist dabei in der Komponente 2a zwei Permanentmagneten 4 auf. Das Befestigungselement 3 besitzt ebenfalls einen Permanentmagneten 4, wobei der Permanentmagnet 4 des Befestigungselements 3 diametral zu den Permanentmagneten 4 der Basis 2 angeordnet ist. Im Ausführungsbeispiel liegt dabei der Permanentmagnet 4 des Befestigungselements 3 so, dass sein Nordpol gegenüber dem Südpol des ersten Permanentmagneten 4 der Basis 2 liegt und der Südpol des Permanentmagneten 4 des Befestigungselements 3 gegenüber dem Nordpol des zweiten Permanentmagneten 4 der Basis 2. Es entsteht somit eine magnetische Wechselwirkung zwischen dem Permanentmagneten 4 des Befestigungselements 3 und den beiden Permanentmagneten 4 der Basis 2.

In der freigebenden Position 19, dargestellt auf der rechten Seite der Figur 9a, ist der Permanentmagnet 4 des Befestigungselements 3 um 180° gedreht. Hierdurch wird die magnetische Anziehungskraft zwischen den Permanentmagneten 4 unterbrochen und das Befestigungselement 3 kann aus der Basis 2 entfernt werden.

Die Figur 9b zeigt die Ausrichtung der Permanentmagneten 4 der Magnetbefestigung 1 aus der Figur 9a in der fixierenden Position 18 und der freigebenden Position 19 in einer Draufsicht. Hier ist zu erkennen, dass in der fixierenden Position 18 auf der linken Seite, die Permanentmagneten 4 der Basis 2 und der Permanentmagnet 4 des Befestigungselements 3 so ausgerichtet sind, dass sich immer ein Nord- und ein Südpol der Permanentmagneten gegenüberliegen. Die rechte Seite der Figur 9b zeigt die Ausrichtung der Permanentmagneten 4, in der freigebenden Position 19, wenn das Befestigungselement 3 um 90 ° gedreht ist. In dieser Position lieft der Nordpol des Permanentmagneten 4 des Befestigungselements 3 auf einer Seite gegenüber dem Südpol des ersten Permanentmagneten 4 der Basis 2 und auf der anderen Seite gegenüber dem Nordpol des zweiten Permanentmagneten 4 der Basis 2. Für den Südpol des Permanentmagneten 4 des Befestigungselements 3 gilt das entsprechende, sodass sich die magnetischen Wechselwirkungen der Permanentmagneten insgesamt aufheben und sich das Befestigungselement 3 leicht aus der Basis 2 lösen lässt.

Das Befestigungselement 3 des Ausführungsbeispiels aus Figur 9 weist zudem an seinem unteren Teil 8 eine Verbreiterung 25 auf. Diese Verbreiterung 25 ist in der fixierenden Position 18 so gegen die Basis 2 verdreht, dass das Befestigungselement 3 nach Art eines Bajonettverschlusses 24 in der Basis 2 gesichert ist. In der freigebenden Position 19 ist die Verbreiterung 25 um 18° gedreht und kann entgegen der Einführungsrichtung aus der Basis 2 entfernt werden. Dazu weist die Basis 2 einen Kanal 33 auf, durch den die Verbreiterung 25 eingeführt und herausgeführt werden kann. Die Verbreiterung 25 des Befestigungselements 3 bildet in Kombination mit der Basis 2 den Bajonettverschluss 24. Der Bajonettverschluss 24 sichert so das Befestigungselement 3 zusätzlich zu den magnetischen Kräften der Permanentmagneten 4 in der Basis 2.

Figur 10 zeigt das Befestigungselement 3 mit der Verbreiterung 25 welche am unteren Teil 8 angeordnet ist und das obere Teil 7, welches als Griff ausgestaltet ist. Das Befestigungselement 3 ist von einer Einhausung 27 umgeben. Die Einhausung 27 umgibt das Befestigungselement 3 vollständig und kann aus einem thermisch- und chemisch widerstandsfähigen Kunststoff oder magnetisch neutralem Stahl bestehen.

Figur 11 zeigt ein weiteres Ausgestaltungsbeispiel der Magnetbefestigung 1, wobei die Basis 2 aus den Komponenten 2a und 2b besteht. Die Komponente 2a besitzt im Ausführungsbeispiel einen Vorsprung 23, welcher sich quer zur Einführungsrichtung 26 des Befestigungselements 3 erstreckt. Im gezeigten Ausführungsbeispiel wird die Komponente 2a mit dem Vorsprung 23 in die zweite Komponente 2b der Basis 2 eingesteckt. Der Vorsprung 23 weist eine Auskragung 22 auf, in welche das Befestigungselement 3 wenigstens teilweise eingeführt wird. Im gezeigten Ausführungsbeispiel sichert das Befestigungselement 3 so die Komponente 2a in der Komponente 2b.

Figur 12 zeigt eine teilweise transparente Draufsicht des Ausführungsbeispiels der Magnetbefestigung 1 aus Figur 12. Hier sind die beiden Komponenten 2a und 2b der Basis 2 zu erkennen, sowie das Befestigungselement 3 in der Halteposition 18. Die Komponente 2b und das Befestigungselement 3 weisen im gezeigten Ausführungsbeispiel jeweils einen Permanentmagneten 4 auf. Diese sind in der fixierenden Position 18 so ausgerichtet, dass zwischen ihnen eine magnetische Anziehungskraft besteht. Die Komponente 2a wird mit ihre Auskragung 22 durch das Befestigungselement 3 in der Komponente 2b der Basis 2 gesichert.

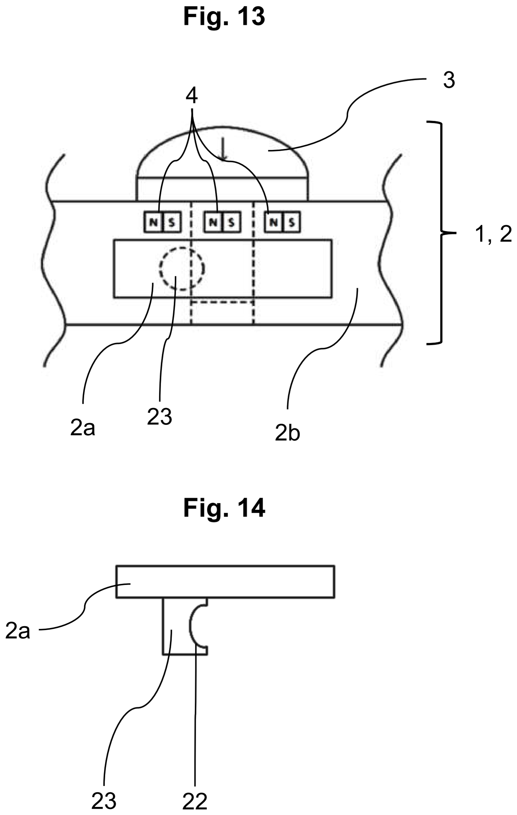

Figur 13 zeigt ein weiteres Ausführungsbeispiel einer Magnetbefestigung 1, ähnlich dem Ausführungsbeispiel aus den Figuren 11 und 12. Hier befinden sich in der Komponente 2b der Basis 2 jeweils zwei Permanentmagneten 4, welche jeweils seitlich des Permanentmagneten 4 des eingeführten Befestigungselements 3 angeordnet sind. Die Komponente 2a der Basis 2 weist, wie im Ausführungsbeispiel der Figuren 11 und 12, einen Vorsprung 23 auf, welcher mittels des Befestigungselements 3 in der Komponente 2b der Basis 2 fixiert wird.

Die Figur 14 zeigt die Komponente 2a aus Figur 13 in einer Detailansicht. Hier ist am Vorsprung 23 die Auskragung 22 zu erkennen.

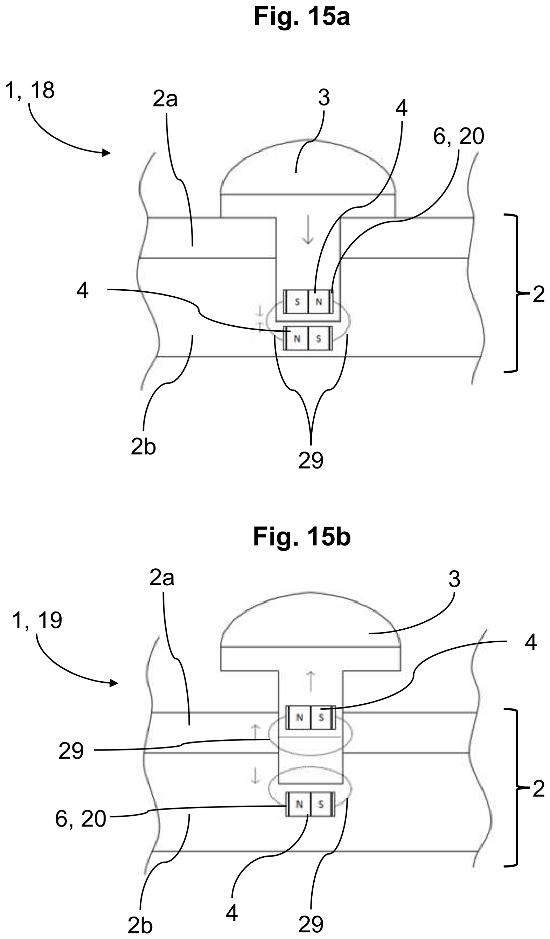

Die Figur 15 zeigt ein weiteres Ausführungsbeispiel einer erfindungsgemäßen Magnetbefestigung 1 in einer fixierenden Position 18 (Figur 15a) und in einer freigebenden Position 19 (Figur 15b). Im Ausführungsbeispiel weist sowohl das Befestigungselement 3 als auch die Komponente 2b der Basis 2 jeweils einen Permanentmagneten 4 auf. Die Permanentmagneten 4 sind an ihren Polseiten 20 jeweils mit einer Stahlplatte 6 versehen. In der fixierenden Position 18 sind die Permanentmagneten 4 so angeordnet, dass jeweils die gegenteiligen Polseiten 20 übereinander angeordnet sind. Beispielhaft ist eine magnetische Feldlinie 29 zwischen den Polen der Permanentmagneten 4 dargestellt.

In der freigebenden Position 19, dargestellt in Figur 15b, ist das Befestigungselement 3 um 180° gegenüber der Basis 2 gedreht. Hierdurch liegen sich jeweils dieselben Polseiten 20 der beiden Permanentmagneten 4 gegenüber, was zu einer abstoßenden Wechselwirkung führt. Das Befestigungselement 3 kann so leicht aus der Basis 2 entfernt werden.

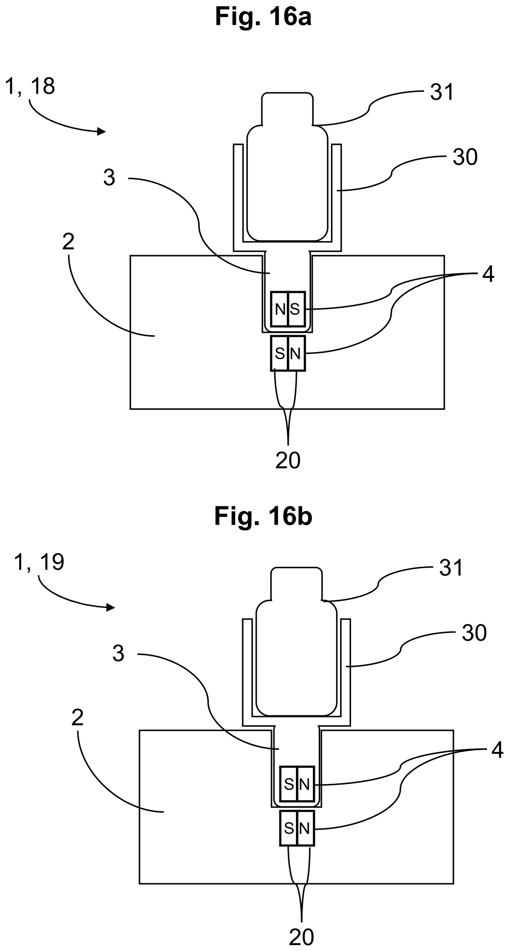

Die Figur 16 zeigt ein weiteres Ausführungsbeispiel einer erfindungsgemäßen Magnetbefestigung 1, wobei das Befestigungselement 3 hier ein Formatteil ist, realisiert in Form einer Aufnahme für einen Behälter 30. Die Aufnahme für einen Behälter 30 nimmt im Ausführungsbeispiel einen Behälter 31 auf. Das Befestigungselement 3 ist dabei in die Basis 2 eingeführt und wird in einer fixierenden Position 18 (Figur 16a) und in einer freigebenden Position 19 (Figur 16b) dargestellt. Sowohl das Befestigungselement 3 als auch die Basis 2 weisen jeweils einen Permanentmagneten 4 auf. In der fixierenden Position 18 liegt dabei der Nordpol des Permanentmagneten 4 des Befestigungselements 3 gegenüber dem Südpol des Permanentmagneten 4 der Basis 2 und andersherum. Die beiden Permanentmagneten 4 sind also diametral zueinander ausgerichtet. So wird das Befestigungselement 3 aufgrund der magnetischen Wechselwirkungen zwischen den beiden Permanentmagneten 4 in der Basis 2 gehalten. In der freigebenden Position 19 liegen sich jeweils die gleichen Polseiten 20 der beiden Permanentmagneten 4 gegenüber. Da Befestigungselement 3 in Form einer Aufnahme für einen Behälter 30 kann so durch Drehung einfach aus der Basis 2 entfernt werden. Die Basis 2 kann dabei Teil einer beweglichen Transporteinrichtung, insbesondere eines Movers, sein.

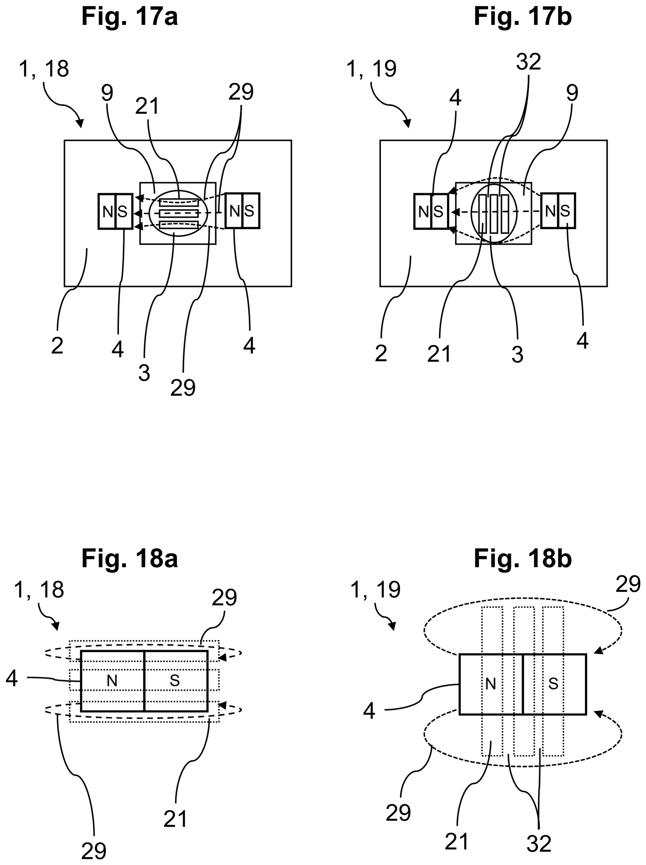

Die Figur 17 zeigt ein weiteres Ausführungsbeispiel einer erfindungsgemäßen Magnetbefestigung 1. Beim Ausführungsbeispiel enthält die Basis 2 seitlich einer Sackbohrung 9 jeweils einen Permanentmagneten 4. Das Befestigungselement 3 ist dabei in die Sackbohrung 9 der Basis 2 eingeführt. Das Befestigungselement 3 wird in Figur 17a in einer fixierenden Position 18 gezeigt und in Figur 17b in einer freigebenden Position 19.

Das Befestigungselement 3 weist bei diesem Ausführungsbeispiel keinen Permanentmagneten 4 auf, sondern ein ferromagnetisches Element 21. Das ferromagnetische Element besteht aus einem länglichen Metallplättchen welches Schlitze 32 aufweist. In der fixierenden Position 18 werden die magnetischen Feldlinie 29 die sich zwischen den beiden Polen der Permanentmagneten 4 ausbilden durch das ferromagnetische Element 21 gebündelt. Beispielhaft sind hier einige magnetische Feldlinien 29 dargestellt, welche durch das ferromagnetische Element 21 verlaufen. Durch Drehung des Befestigungselements 3 um 90°, wie in Figur 17b dargestellt, wird diese Bündelung der magnetischen Feldlinien 21 aufgehoben, da die magnetischen Feldlinien 29 den Zwischenraum, der sich durch die Schlitze 32 des ferromagnetischen Elements 21 bildet, Überbrücken müssten. Die magnetischen Feldlinien 29 verlaufen daher bevorzugt außerhalb des ferromagnetischen Elements 21. Dieser Effekt kann verstärkt werden, wenn die Schlitze 21 aus einem abschirmenden Material gefertigt sind. So wird die magnetische Anziehungskraft, die die Permanentmagneten 4 auf das ferromagnetische Element 21 ausübt, abgeschwächt. Hierdurch lässt sich das Befestigungselement 3 leichter aus der Basis 2 Entfernen als in der fixierenden Position 18.

Die Figur 18 zeigt die Anordnung eines Permanentmagneten 4 und eines ferromagnetischen Elements 21, wie sie in einem weiteren Ausführungsbeispiel der Magnetbefestigung 1 angeordnet sein können. Hierbei sind der Permanentmagnet 4 und das ferromagnetische Element 21 übereinander angeordnet. Das ferromagnetische Element 21 weist wie im vorherigen Ausführungsbeispiel in seiner Längsrichtung Schlitze 32 auf. Ist das ferromagnetische Element wie in Figur 18a gezeigt in seiner Längsausrichtung entlang des Permanentmagneten 4 ausgerichtet, werden die magnetischen Feldlinien 29 durch das ferromagnetische Element 21 gebündelt, wodurch sich die magnetische Anziehungskraft zwischen dem Permanentmagneten 4 und dem ferromagnetische Element 21 verstärkt. So wird die fixierende Position 18 gebildet. In Figur 18b ist das ferromagnetische Element im Vergleich zur Figur 18a gegenüber dem Permanentmagneten 4 um 90° gedreht. Aufgrund der Schlitze 32 die im Ausführungsbeispiel quer zur Längsausrichtung des Permanentmagneten 4 angeordnet sind, findet keine Bündelung der magnetischen Feldlinien 29 durch das ferromagnetische Element 21. Die magnetische Anziehungskraft zwischen Permanentmagneten 4 und ferromagnetischem Element 21 wird so abgeschwächt.

### Bezugszeichenliste

1 Magnetbefestigung
2 Basis
2a erste Komponente der Basis
2b zweite Komponente der Basis
3 Befestigungselement
4 Permanentmagnet
5 seitlicher Permanentmagnet
6 Stahlplatte
7 Befestigungselement, oberer Teil
8 Befestigungselement, unterer Teil
9 Sackbohrung
10 Durchgangsbohrung
11 seitliche Bohrung
12 Verschluss der Sackbohrung
13 seitlicher Verschluss
14 zylindrische Erhöhung
15 Abdeckung des Befestigungselements
16 zylindrischer Verschluss
17 Befestigungselement mit Sackbohrung
18 fixierende Position
19 freigebende Position
20 Polseite
21 ferromagnetisches Element
22 Auskragung
23 Vorsprung
24 Bajonettverschluss
25 Verbreiterung
26 Einführungsrichtung
27 Einhausung
28 Zwischenwand
29 Magnetische Feldlinie
30 Aufnahme für Behälter
31 Behälter
32 Schlitze
33 Kanal

## Patentansprüche

1. Pharmazeutische Anlage mit einer kontrollierten Umgebung, aufweisend eine Magnetbefestigung (1), wobei die Magnetbefestigung (1) aus einer Basis (2) und einem Befestigungselement (3) besteht, welche zwischen einer fixierenden (18) und einer freigebenden Position (19) geschaltet werden kann, **dadurch gekennzeichnet, dass** die fixierende Position (18) permanentmagnetisch gesichert ist.

2. Pharmazeutische Anlage mit einer kontrollierten Umgebung, aufweisend eine Magnetbefestigung (1) nach Anspruch 1, **dadurch gekennzeichnet, dass** das Befestigungselement (3) ein Formatteil ist.

3. Pharmazeutische Anlage mit einer kontrollierten Umgebung, aufweisend eine Magnetbefestigung (1) nach einem der vorangehenden Ansprüche, **dadurch gekennzeichnet, dass** die Basis (2) aus wenigstens zwei Komponenten (2a und 2b) besteht, insbesondere wobei wenigstens eine der Komponenten (2a und/oder 2b) ein Formatteil ist und wobei das wenigstens eine Formatteil wechselbar ist.

4. Pharmazeutische Anlage mit einer kontrollierten Umgebung, aufweisend eine Magnetbefestigung (1) nach einem der vorangehenden Ansprüche, **dadurch gekennzeichnet, dass** in der fixierenden Position (18) ein Formschluss zwischen dem Befestigungselement (3) und wenigstens einem Teil der Basis (2), vorzugsweise aller Komponenten (2a und 2b) der Basis (2), erreicht wird, insbesondere wobei der Formschluss quer zu einer Einführrichtung des Befestigungselements (3) erreicht wird.

5. Pharmazeutische Anlage mit einer kontrollierten Umgebung, aufweisend eine Magnetbefestigung (1) nach einem der vorangehenden Ansprüche, **dadurch gekennzeichnet, dass** das Befestigungselement (3) wenigstens einen Permanentmagneten (4) und/oder wenigstens ein ferromagnetisches Element (21) enthält und/oder dass die Basis (2), insbesondere eine Komponente (2a oder 2b), wenigstens einen Permanentmagneten (4) und/oder wenigstens ein ferromagnetisches Element (21) enthält.

6. Pharmazeutische Anlage mit einer kontrollierten Umgebung, aufweisend eine Magnetbefestigung (1) nach einem der vorangehenden Ansprüche, **dadurch gekennzeichnet, dass** das Befestigungselement (3) und die Basis (2) je wenigstens einen Permanentmagneten (4) enthält, wobei in der fixierenden Position (18) die Permanentmagneten (4) so angeordnet sind, dass die Permanentmagneten (4) versetzt, insbesondere diametral, zueinander positioniert sind.

7. Pharmazeutische Anlage mit einer kontrollierten Umgebung, aufweisend eine Magnetbefestigung (1) nach einem der vorangehenden Ansprüche, **dadurch gekennzeichnet, dass** wenigstens an einer Polseite (20) eines Permanentmagneten (4) eine Stahlplatte (6), insbesondere zur Erhöhung eines magnetischen Flusses, angebracht ist.

8. Pharmazeutische Anlage mit einer kontrollierten Umgebung, aufweisend eine Magnetbefestigung (1) nach einem der vorangehenden Ansprüche, **dadurch gekennzeichnet, dass** wenigstens ein Permanentmagnet (4) kubisch und/oder tonnenförmig und/oder scheibenförmig ausgeformt ist.

9. Pharmazeutische Anlage mit einer kontrollierten Umgebung, aufweisend eine Magnetbefestigung (1) nach einem der vorangehenden Ansprüche, dass das Befestigungselement (3) vollständig, insbesondere mit einem thermisch- und chemisch widerstandsfähigen Kunststoff, insbesondere PVDF, und/oder magnetisch neutralem Stahl, insbesondere Edelstahl, eingehaust ist.

10. Pharmazeutische Anlage mit einer kontrollierten Umgebung, aufweisend eine Magnetbefestigung (1) nach einem der vorangehenden Ansprüche, **dadurch gekennzeichnet, dass** das Befestigungselement (3) bei Zusammenführung mit der Basis (2) durch magnetische Anziehung in eine Halteposition gebracht und gehalten wird.

11. Pharmazeutische Anlage mit einer kontrollierten Umgebung, aufweisend eine Magnetbefestigung (1) nach einem der vorangehenden Ansprüche, **dadurch gekennzeichnet, dass** eine Drehung des Befestigungselements (3) gegen die Basis (2) zur Schwächung der magnetischen Anziehung führt und ein leichtes Lösen der Befestigung ermöglicht.

12. Pharmazeutische Anlage mit einer kontrollierten Umgebung, aufweisend eine Magnetbefestigung (1) nach einem der vorangehenden Ansprüche, **dadurch gekennzeichnet, dass** die Basis (2) eine Sackbohrung (9) aufweist, ein ferromagnetisches Element (21) oder einen Permanentmagneten (4) enthält und in die das Befestigungselement (3) eingeführt werden kann.

13. Pharmazeutische Anlage mit einer kontrollierten Umgebung, aufweisend eine Magnetbefestigung (1) nach einem der vorangehenden Ansprüche, **dadurch gekennzeichnet, dass** wenigstens ein Teil der Basis (2), insbesondere eine der wenigstens zwei Komponenten (2a oder 2b), eine Durchgangsbohrung (10) aufweist in die das Befestigungselement (3) eingeführt werden kann und/oder dass wenigstens ein Teil der Basis (2), insbesondere eine der wenigstens zwei Komponenten (2a oder 2b), eine Durchgangsbohrung (10) aufweist und/oder ein vorzugsweise andere Teil, insbesondere eine der wenigstens zwei Komponenten (2a oder 2b), eine Auskragung (22) an einem Vorsprung (23) aufweist.

14. Pharmazeutische Anlage mit einer kontrollierten Umgebung, aufweisend eine Magnetbefestigung (1) nach einem der vorangehenden Ansprüche, **dadurch gekennzeichnet, dass** die Basis (2) eine Erhöhung (14) aufweist auf welche das Befestigungselement (3) aufgesteckt werden kann.

15. Pharmazeutische Anlage mit einer kontrollierten Umgebung, aufweisend eine Magnetbefestigung (1) nach einem der vorangehenden Ansprüche, **dadurch gekennzeichnet, dass** das Befestigungselement (3) und/oder die Basis (2), insbesondere die enthaltenen Permanentmagneten (4) für die Reinigung oder Desinfektion in einem Dampfsterilisator oder Autoklaven geeignet sind, wobei die Magnetisierung der Permanentmagneten (4) auch bei einer Temperatur von wenigstens 100 °C, insbesondere wenigstens 121 °C, erhalten bleibt.

16. Pharmazeutische Anlage mit einer kontrollierten Umgebung, aufweisend eine Magnetbefestigung (1) nach einem der vorangehenden Ansprüche, **dadurch gekennzeichnet, dass** das Befestigungselement (3) in der fixierenden Position (18) zusätzlich durch einen Bajonettverschluss (24) gesichert ist.
